# EUROPEAN PATENT SPECIFICATION

(11) **EP 2 122 071 B1**
(45) Date of publication and mention of the grant of the patent: **04.04.2012**
(21) Application number: 08709376.1
(22) Date of filing: 13.02.2008
(51) Int. Cl.: E03B 3/03, C02F 9/00

(54) **FLUID TRANSPORT APPARATUS**
FLUIDTRANSPORTVORRICHTUNG
APPAREIL DE TRANSPORT DE FLUIDE

(30) Priority: 15.02.2007 GB 0702910
(43) Date of publication of application: 25.11.2009
(73) Proprietor: Red Button Design Limited, Dumbarton G82 3PW (GB)
(72) Inventor: BROWN, James, Cambridgeshire CB4 5SH (GB); JONES, Amanda, Glasgow G20 9QN (GB); PANG, Nicholas, Glasgow G3 6LJ (GB)
(74) Representative: Harrison Goddard Foote
(86) International application number: PCT/GB2008/000482
(87) International publication number: WO 2008/099158

(56) References cited:
- US-B1- 6 641 729

## Description

### Field of the Invention

The present invention relates to an apparatus for storing, transporting and purifying water.

### Background to the Invention

Clean water for drinking, cooking and sanitation is recognised as an essential requirement for maintaining a healthy society. However, in developing countries water supplies can be scarce and it is known for individuals to have to walk large distances to find a supply of clean water. If the individual has no means of transportation, the amount of water the individual can take back to where it is required can be limited by the amount that the individual can physically carry.

Where the individual is weak or suffering an illness, he may be forced to use more local sources of water which may not be clean or indeed may be severely contaminated which may, in turn, exacerbate the individual's condition.

US 6 641 729 describes a mobile water purifying device in accordance with the preamble of Claim 1.

### Statement of Invention

According to a first aspect of the present invention there is provided a fluid transportation apparatus for sanitising fluid as the fluid is transported from one location to another, the apparatus comprising:
a first fluid storage compartment;
a second fluid storage compartment, the first and second storage compartments being in fluid communication via a first filter, and
at least one ground engaging wheel for assisting in moving the apparatus from one location to another;
wherein rotation of the at least one wheel causes, in use, fluid to be transferred from one storage compartment to the other storage compartment through the first filter.

In one embodiment of the invention, as the water is transferred from one compartment to the other through the filter, impurities in the water are filtered out. As the apparatus can be wheeled from one location to another more liquid can be transported than if the user was carrying the liquid in a container.

Preferably, the fluid transportation apparatus comprises a housing.

Preferably, the housing is adapted to house the first and second storage compartments and the filter.

Preferably, each of said fluid storage compartments is flexible.

Preferably, each of said fluid storage compartments is collapsible.

Preferably, each of said fluid storage compartments is adapted to move from a collapsed configuration to a filled configuration as it is filled with water.

Preferably, each of said fluid storage compartments is adapted to collapse as it is emptied of water. Providing storage tanks which expand and collapse as they are filled or emptied of water, maximises the utilisation of space within the apparatus.

Preferably, at least one of said fluid storage compartments is compressible.

Preferably, the/each compressible fluid storage compartment is adapted to eject water when subject to a compressive force. By applying a compressive force to the fluid storage compartment, contaminated water can be driven from the compartment through the filter.

Preferably, one of said compartments has an inlet port. An inlet port is provided to facilitate filling of said compartment.

Preferably, the other of said compartments has an outlet port. An outlet port is provided to facilitate the emptying of the compartment.

Preferably, the inlet port comprises a second filter. A second or pre-filter is provided to provide an initial filtration of the water prior to entering one of said fluid storage tanks.

Preferably, the apparatus further comprises drive means attached to at least one of the at least one ground engaging wheels. The drive means is adapted to assist in the transport of fluid from one storage compartment to the other storage compartment upon rotation of the at least one wheel.

Preferably, the drive means is selectively engagable with at least one of said ground engaging wheels.

Most preferably, the drive means is only engaged with at least of said ground engaging wheels in one direction of rotation of said wheel.

Preferably, in use, rotation of the at least one wheel causes the first filter to selectively translate with respect to the housing.

In one embodiment, the first filter is provided as an interface between the first and second fluid storage compartments.

Preferably, the translation of the filter compresses one of said first and second fluid compartments. Compressing one of the compartments causes a build-up of pressure on a fluid contained within the compartment. As the pressure builds up, fluid will be driven through the filter into the other compartment.

Preferably, the drive means is adapted to selectively translate the first filter with respect to the housing.

In this embodiment, the drive means may be connected to two ground engaging wheels.

In an alternative embodiment, the apparatus further comprises a pump.

Preferably, the pump is adapted to pump water from one of said fluid storage compartments to the other of said fluid storage compartments through the filter.

In this embodiment, the filter remains fixed with respect to the housing. Preferably, the pump is driven by the drive means.

In this embodiment, the drive means is driven by one of said at least one ground engaging wheels.

Preferably, the apparatus further comprises a check valve. A check valve is provided to ensure the water can only pass through the filter in one direction.

Preferably, the check valve can be disabled. Disabling the check valve permits the apparatus to be back washed.

Preferably, the first filter is modular.

Preferably, the modular filter comprises a series of sub-filters. Preferably, the sub-filters have varying pore size.

In one embodiment, as water passes through the modular filter, it encounters a series of sub-filters of gradually reducing pore size.

Preferably, the drive means is geared. Providing a geared drive means ensures that the pump or the translatable filter are operated at an optimum speed.

Preferably, the apparatus comprises at least one handle.

In one embodiment the handle is for pushing the apparatus.

Additional handles may be provided to lift the apparatus. It may be necessary to lift the apparatus over ground which is, for example, rocky or uneven.

Preferably, the storage compartment inlet and/or outlet can be sealed.

Preferably, the apparatus further comprises a cradle. A cradle may be provided to hold the housing, permitting the housing to be disconnected from the rest of the apparatus for more convenient use.

### Brief Description of the Drawings

Embodiments of the present invention will now be described with reference to the accompanying drawings in which:
Figure 1 is a perspective view of an apparatus according to a first embodiment of the present invention;
Figure 2 is a perspective view of part of the apparatus of Figure 1;
Figure 3 is a front view of part of the apparatus of Figure 1;
Figure 4 is an exploded perspective view of the drive system and filter of the apparatus of Figure 1;
Figure 5 is a perspective view of an apparatus according to a second embodiment of the present invention;
Figure 6 is a front view of part of the apparatus of Figure 5; and
Figures 7 and 8 are schematics showing the operation of the apparatus of Figure 5.

### Detailed Description of Drawings

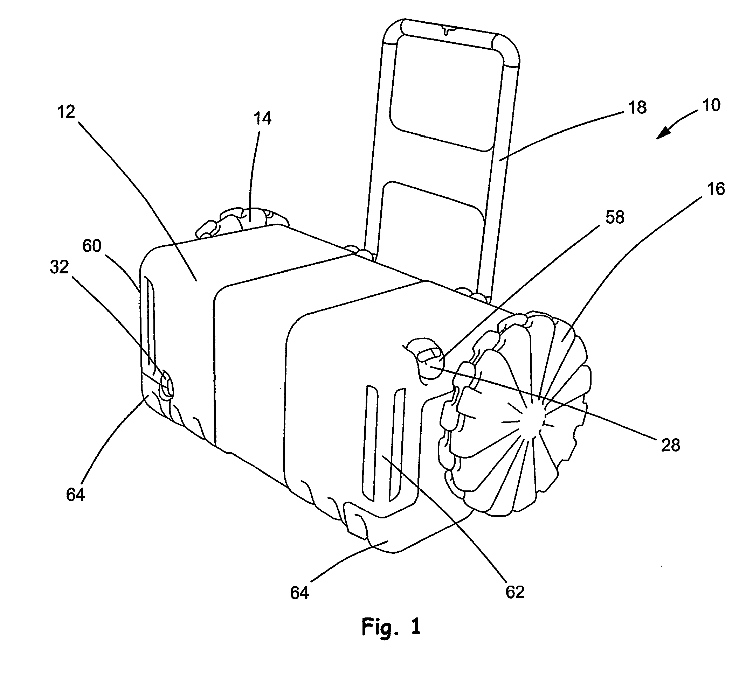

Referring firstly to Figure 1, there is shown a fluid transportation apparatus, generally indicated by reference numeral 10, for sanitising fluid as the fluid is transported from one location to another, according to a first embodiment of the present invention.

The apparatus 10 comprises a housing 12, first and second ground engaging wheels 14,16 and a handle 18 for pushing the housing 12 along. The housing further comprises first and second carry handles 60,62 to permit the apparatus to be carried over rough ground or to be removed from a housing cradle 64 for cleaning or emptying purposes.

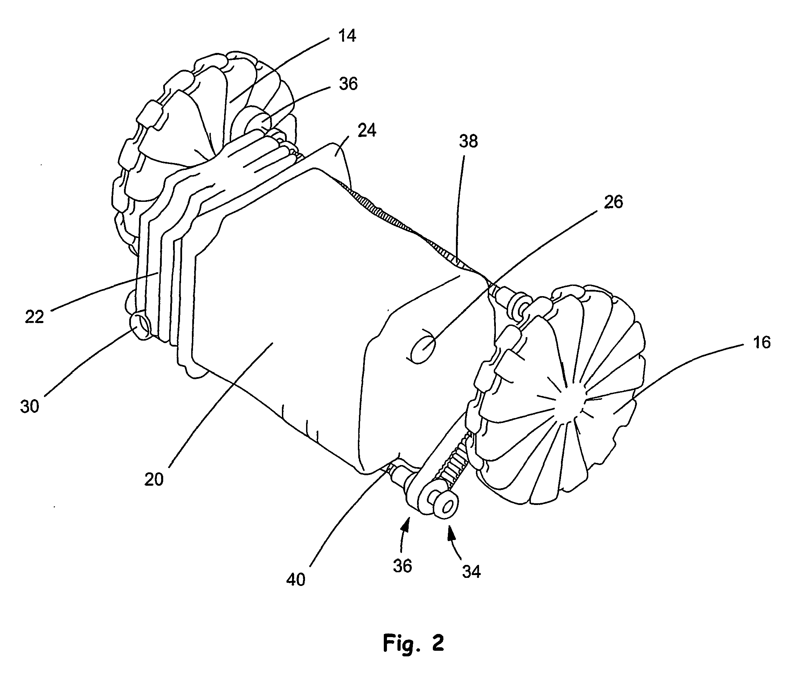

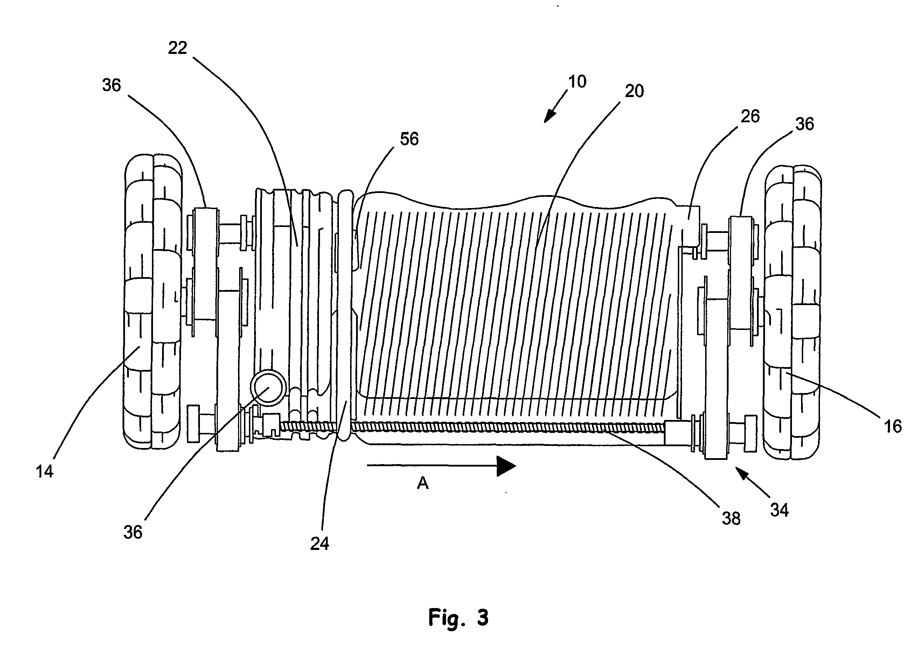

Referring to Figures 2 and 3, perspective and front views of part of the apparatus 10 of Figure 1 respectively, the contents of the housing 12 can be seen. The housing 12 contains a collapsible first fluid storage compartment 20, a collapsible second fluid storage compartment 22 and a filter 24. The first and second fluid storage compartments 20,22 are in fluid communication via the filter 24, such that rotation of the first and second wheels 14,16 causes contaminated water to be transferred from the first fluid storage compartment 20 to the second fluid storage compartment 22 through the filter 24, thereby sanitising the water.

The first storage compartment 20 is filled through a compartment inlet 26 which is in turn connected to a housing inlet 28 (shown in Figure 1). The housing inlet 28 is sealable by an inlet cap 58 which screws down onto an o-ring (not shown) to prevent water escaping. Similarly, the second storage compartment 22 includes an outlet 30 which is connected to a housing outlet 32 (also shown in Figure 1).

A drive system 34 (shown most clearly in Figure 2) is provided to translate the filter 24 with respect to the housing 12 as the wheels 14,16 rotate. Each wheel 14,16 is connected to a reduction gear set 36 which is in turn connected to a first and a second lead screw 38,40 both of which are threadedly engaged with the filter 24.

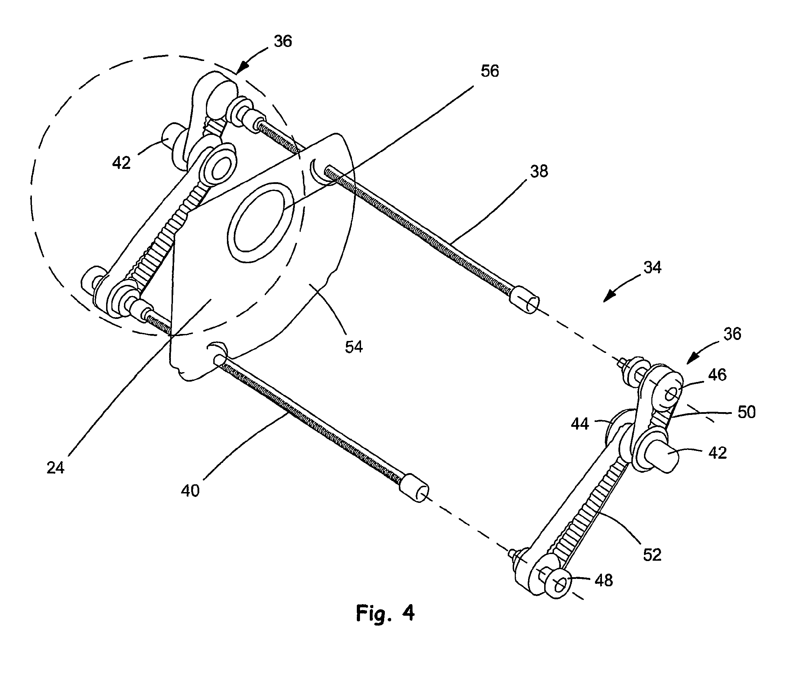

The drive system 34 will now be described in more detail with reference to Figure 4, an exploded perspective view of the drive system 34. The wheels (not shown) are attached to the gear sets 36 by one way bearings 42. Each one way bearing ensures the drive system 34 is only driven as the apparatus 10 is pushed forward. Each gear set 36 comprises a primary gear 44 connected to first and second secondary gears 46,48. The primary gear 44 is connected to the first and second secondary gears 46,48 by first and second toothed belts 50,52. Each secondary gear 46,48 is connected to one of the lead screws 38,40. As previously described, the lead screws 38,40 are threadedly engaged with the filter 24 such that rotation of the lead screws 38,40 causes the filter 24 to translate along the lead screws 38,40. As the wheels 14,16 are connected to the drive system 36 by one way bearings 42, the lead screws 38,40 only rotate as the apparatus 10 is pushed forward with the result that the filter 24 only moves in normal use in one direction along the screws 38,40. It can be seen that the filter 24 comprises a filter housing 54 and a filter mesh 56. It is through the filter mesh 56 that the water passes, the water being sanitised in the process.

Referring back to Figure 3, the operation of the apparatus 10 will now be described. Potentially contaminated water is poured into the first storage compartment 20 through the housing inlet (not shown) and the storage compartment inlet 26. At this time the second storage compartment 22 is empty of water and in a collapsed configuration. Once the first storage compartment 20 is filled, the user wheels the apparatus 10 by pushing the handle 18 (shown in Figure 1) causing the first and second wheels 14,16 to rotate. Rotation of the wheels 14,16 as the apparatus 10 is pushed forward, results in the gear sets 36 rotating the lead screws 38,40. Rotation of the lead screws 38,40 translates the filter 24 in the direction of arrow A, which in turn compresses the collapsible first storage compartment 20. Because the first compartment inlet 28 is sealed by the inlet cap 58, the compression force applied by the filter 24 forces the water in the first storage compartment 20 through the filter mesh 56 into the second fluid storage compartment 22. As the water passes through the filter mesh 56, impurities are removed from the water with the result that the water entering the second storage compartment 22 is purified and ready to drink. As the filter 24 moves along the lead screws 38,40 in the direction of arrow A, the water is transferred from the first compartment 20 to the second compartment 22 until the second compartment 20 is at least partially filled, and the first compartment 20 is at least partially emptied and has at least partially collapsed.

Once the filter 24 has fully traversed the apparatus 10 and the second storage compartment contains sufficient purified water, the drive system 34 can be disengaged from the wheels 14,16. When the user is ready to use the water, water can be decanted from the second fluid storage container 22 via the container outlet 30.

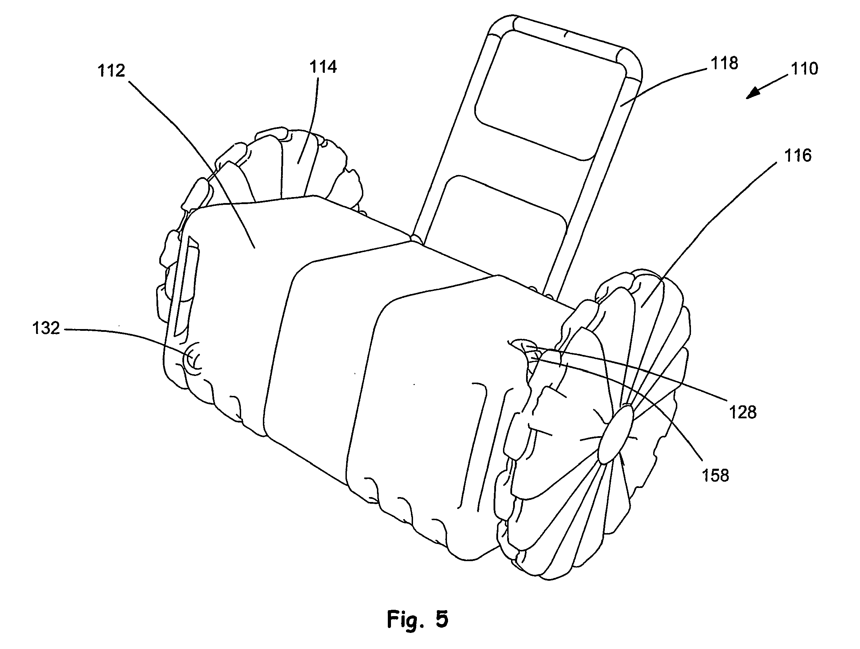

A second embodiment of the present invention will now be described with reference to Figure 5, a fluid transportation apparatus 110 for sanitising fluid as the fluid is transported from one location to another. Some of the features of the apparatus 110 of the second embodiment are similar to the features of the apparatus 10 of the first embodiment and these similar features are given the same reference numeral incremented by 100.

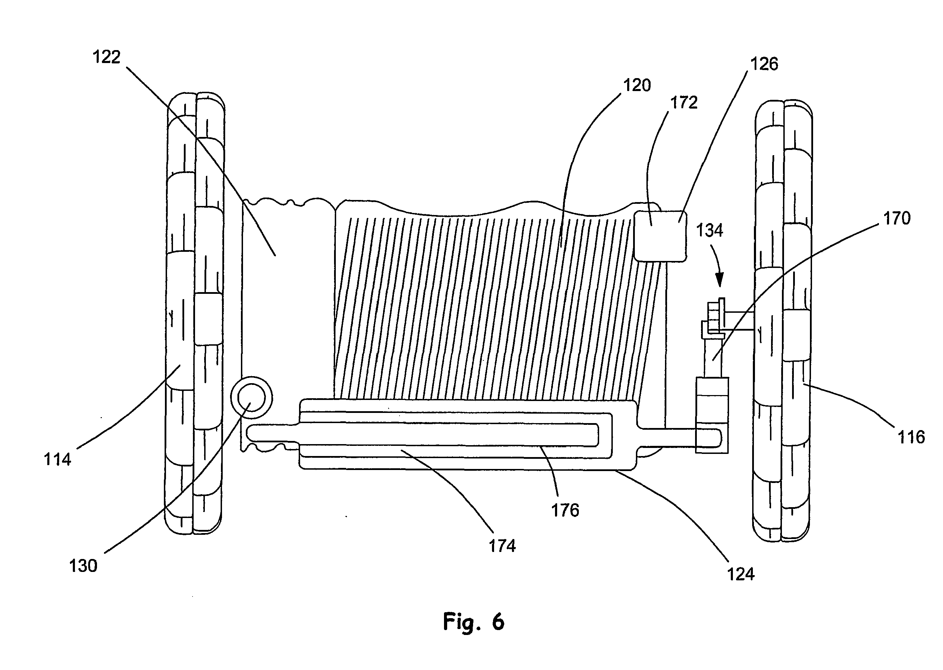

The essential difference between the two embodiments 10,110 relates to the movement of water from the first storage compartment 120 to the second storage compartment 122. In the apparatus 110 of the second embodiment, a pump 170 is provided which pumps water from the first compartment 120 through a stationary filter 124 to the second compartment 122. The pump 170 and the stationery filter 124 can be best seen in Figure 6, a front view of part of the apparatus 110 of Figure 5.

In addition, the first storage compartment inlet 126 includes a pre-filter 172 for providing an initial filtration of the contaminated water entering the first storage compartment 120.

The stationary filter 124 is a modular filter in that it comprises a first filter screen 174 and a second filter screen 176, each filter screen 174,176 defining a series of pores (not shown), the pores in the first filter screen 174 being larger than the pores in the second filter screen 176. The apparatus drive system 134 drives the pump 170 to move the water from the first compartment 120 to the second compartment 122. It will be noted that the drive system 134 is only associated with the second ground engaging wheel 116.

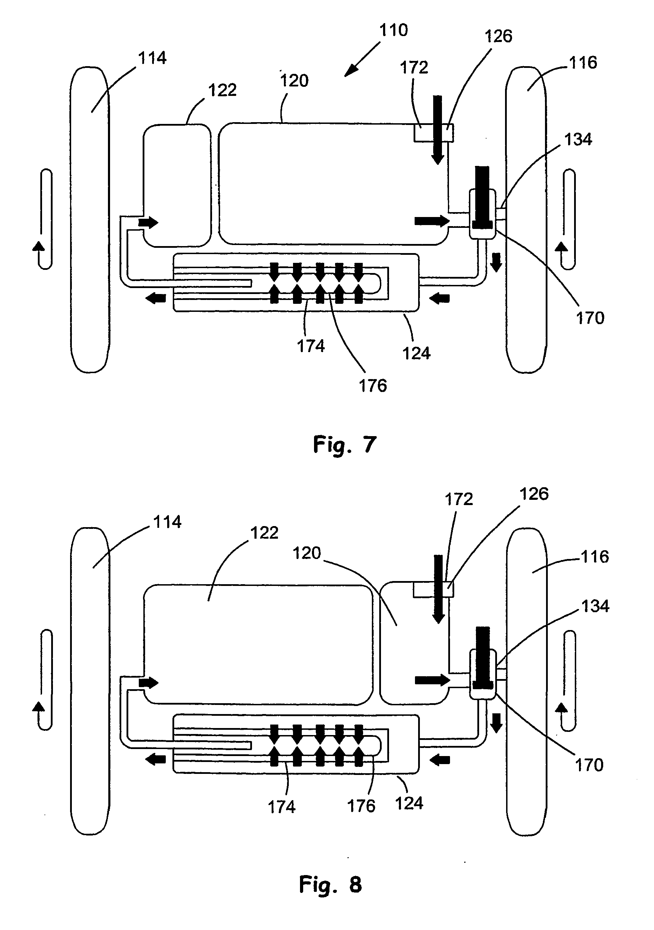

Operation of the apparatus 110 will now be described with reference to Figures 7 and 8, schematic views of the apparatus 110. Referring firstly to Figure 7, water to be sanitised is pumped through the first storage compartment inlet 126 and the pre-filter 172, into the first storage compartment 120. Once the first storage compartment 120 is fully inflated with water, the housing cap 158 is replaced which seals the first storage compartment 120. As the apparatus 110 is pushed by the handle 118 (see Figure 1), the wheels 114,116 rotate, rotation of the second wheel 116 driving the pump 170 through the drive system 134. The action of the pump 170 moves water from the first storage compartment 120 to the filter 124. The water passes through the stationary filter 124 (through the first and second filter membranes 174,176 in particular) and the continued action of the pump 117 pumps the filtered water into the second storage compartment 122. As clean water enters the second storage compartment 122, the second compartment 122 fills at the same rate that the first compartment 120 empties causing the first compartment 120 to collapse, as shown in Figure 8.

Various modifications and improvements may be made to the above described embodiments without departing from the scope of the invention. For example, although the filter of the first embodiment comprises a single mesh, multiple meshes of gradually decreasing pore size could be used.

## Claims

1. A fluid transporting apparatus (10) for sanitising fluid as the fluid is transported from one location to another, the apparatus (10) comprising:
a first fluid storage compartment (20);
a second fluid storage compartment (22), the first and second storage compartments being in fluid communication via a first filter (24); and
at least one ground engaging wheel (14) for assisting in moving the apparatus (10) from one location to another,
**characterised in that** rotation of the at least one wheel (14) as the fluid is transported from one location to another causes fluid to be transferred from one storage compartment (20) to the other storage compartment (22) through the first filter (24).

2. A fluid transporting apparatus (10) of claim 1, wherein each of said fluid storage compartments (20, 22) is flexible or collapsible.

3. A fluid transporting apparatus (10) of claim 2, wherein each of said fluid storage compartments (20, 22) is adapted to move from a collapsed configuration to a filled configuration as it is filled with water.

4. A fluid transporting apparatus (10) of claim 2 or 3 wherein each of said fluid storage compartments (20, 22) is adapted to collapse as it is emptied of water.

5. A fluid transporting apparatus (10) of any preceding claim, wherein at least one of said fluid storage compartments (20, 22) is compressible.

6. A fluid transporting apparatus (10) of claim 5, wherein the or each compressible fluid storage compartment (20, 22) is adapted to eject water when subject to a compressive force.

7. A fluid transporting apparatus (10) of any preceding claim, including drive means (34) which is selectively engagable with at least one of said ground engaging wheels (14).

8. A fluid transporting apparatus (10) of claim 7, wherein the drive means (34) is only engaged with at least of said ground engaging wheels (14) in one direction of rotation of said wheel (14).

9. A fluid transporting apparatus (10) of any preceding claim, including a housing (12) for housing the first and second storage compartments (20, 22), and wherein rotation of the at least one wheel (14) causes the first filter (24) to selectively translate with respect to the housing (12).

10. A fluid transporting apparatus (10) of any preceding claim, wherein the first filter (24) is provided as an interface between the first and second fluid storage compartments (20, 22).

11. A fluid transporting apparatus (10) of claim 9, wherein the translation of the filter (24) compresses one of said first and second fluid compartments (20, 22).

12. A fluid transporting apparatus (10) of any preceding claim, including a pump (170) adapted to pump fluid from one of said fluid storage compartments (20) to the other of said fluid storage compartments (22) through the filter (24).

13. A fluid transporting apparatus (10) of claim 12 when dependent on claim 7, wherein the pump (170) is driven by the drive means (34).

14. A fluid transporting apparatus (10) of any of claims 7 or 8, wherein the drive means (34) is geared.

15. A fluid transporting apparatus (10) of any preceding claim, wherein the apparatus comprises at least one handle (18).

## Patentansprüche

1. Vorrichtung zur Beförderung einer Flüssigkeit (10) zur Reinigung der Flüssigkeit bei der Beförderung der Flüssigkeit von einer Stelle zu einer anderen, wobei die Vorrichtung (10) folgendes umfasst:
eine erste Flüssigkeitslagerungskammer (20);
eine zweite Flüssigkeitslagerungskammer (22), wobei die erste und zweite Lagerungskammern über einen ersten Filter (24) in Fluidverbindung miteinander stehen; und
zumindest ein Bodeneingriffsrad (14) zur Hilfe bei der Bewegung der Vorrichtung (10) von einer Stelle zu einer anderen,
**dadurch gekennzeichnet, dass** die Drehung des zumindest einem Rads (14) bei der Beförderung der Flüssigkeit von einer Stelle zu einer anderen bewirkt, dass Flüssigkeit durch den ersten Filter (24) von einer Lagerungskammer (20) zur anderen Lagerungskammer (22) verlagert wird.

2. Vorrichtung zur Beförderung einer Flüssigkeit (10) von Anspruch 1, wobei jede der Flüssigkeitslagerungskammern (20, 22) biegbar oder zusammenklappbar ist.

3. Vorrichtung zur Beförderung einer Flüssigkeit (10) von Anspruch 2, wobei jede der Flüssigkeitslagerungskammern (20, 22) zum Verstellen von einer zusammengeklappten Ausgestaltung zu einer gefüllten Ausgestaltung beim Auffüllen mit Wasser ausgeführt ist.

4. Vorrichtung zur Beförderung einer Flüssigkeit (10) von Anspruch 2 oder 3, wobei jede der Flüssigkeitslagerungskammern (20, 22) zum Zusammenklappen beim Entleeren des Wassers ausgeführt ist.

5. Vorrichtung zur Beförderung einer Flüssigkeit (10) von einem der vorhergehenden Ansprüche, wobei zumindest eine der Flüssigkeitslagerungskammern (20, 22) zusammendrückbar ist.

6. Vorrichtung zur Beförderung einer Flüssigkeit (10) von Anspruch 5, wobei die oder jede zusammendrückbare Flüssigkeitslagerungskammer (20, 22) ausgeführt ist, um Wasser abzulassen, wenn sie einer Druckkraft ausgesetzt wird.

7. Vorrichtung zur Beförderung einer Flüssigkeit (10) von einem der vorhergehenden Ansprüche, umfassend Antriebsmittel (34), das selektiv mit zumindest einem der Bodeneingriffsräder (14) im Eingriff stehen kann.

8. Vorrichtung zur Beförderung einer Flüssigkeit (10) von Anspruch 7, wobei das Antriebsmittel (34) nur im Eingriff mit zumindest einem der Bodeneingriffsräder (14) in einer Drehungsrichtung des Rads (14) steht.

9. Vorrichtung zur Beförderung einer Flüssigkeit (10) von einem der vorhergehenden Ansprüche, umfassend ein Gehäuse (12) zum Aufnehmen der ersten und zweiten Lagerungskammern (20, 22), und wobei die Drehung des zumindest einem Rads (14) bewirkt, dass der erste Filter (24) sich selektiv bezüglich des Gehäuses (12) verschiebt.

10. Vorrichtung zur Beförderung einer Flüssigkeit (10) von einem der vorhergehenden Ansprüche, wobei der erste Filter (24) als eine Schnittfläche zwischen der ersten und zweiten Flüssigkeitslagerungskammer (20, 22) vorgesehen ist.

11. Vorrichtung zur Beförderung einer Flüssigkeit (10) von Anspruch 9, wobei die Verschiebung des Filters (24) zumindest eine der ersten und zweiten Flüssigkeitslagerungskammern (20, 22) zusammendrückt.

12. Vorrichtung zur Beförderung einer Flüssigkeit (10) von einem der vorhergehenden Ansprüche, umfassend eine Pumpe (170), die ausgeführt ist, um Flüssigkeit von einer der Flüssigkeitslagerungskammern (20) zu dem anderen der Flüssigkeitslagerungskammern (22) durch den Filter (24) zu pumpen.

13. Vorrichtung zur Beförderung einer Flüssigkeit (10) von Anspruch 12, wenn es auf Anspruch 7 abhängig ist, wobei die Pumpe (170) von dem Antriebsmittel (34) angetrieben wird.

14. Vorrichtung zur Beförderung einer Flüssigkeit (10) von einem der Ansprüche 7 oder 8, wobei das Antriebsmittel (34) verzahnt ist.

15. Vorrichtung zur Beförderung einer Flüssigkeit (10) von einem der vorhergehenden Ansprüche, wobei die Vorrichtung zumindest einen Handgriff (18) umfasst.

## Revendications

1. Un équipement de transport de fluide (10) destiné à assainir du fluide à mesure que le fluide est transporté d'un lieu à un autre, l'équipement (10) comportant :
un premier compartiment de stockage de fluide (20) ;
un deuxième compartiment de stockage de fluide (22), le premier et le deuxième compartiment de stockage étant en communication fluidique par l'intermédiaire d'un premier filtre (24) ; et
au moins une roue (14) en contact avec le sol pour aider à déplacer l'équipement (10) d'un lieu à un autre,
**caractérisé en ce que** la rotation de l'au moins une roue (14) à mesure que le fluide est transporté d'un lieu à un autre amène le fluide à être transféré d'un compartiment de stockage (20) à l'autre compartiment de stockage (22) à travers le premier filtre (24).

2. Un équipement de transport de fluide (10) de la revendication 1, dans lequel chacun desdits compartiments de stockage de fluide (20, 22) est flexible ou pliable.

3. Un équipement de transport de fluide (10) de la revendication 2, dans lequel chacun desdits compartiments de stockage de fluide (20, 22) est adapté pour se déplacer d'une configuration pliée à une configuration remplie à mesure qu'il est rempli d'eau.

4. Un équipement de transport de fluide (10) de la revendication 2 ou la revendication 3 dans lequel chacun desdits compartiments de stockage de fluide (20, 22) est adapté pour se plier à mesure qu'il est vidé de son eau.

5. Un équipement de transport de fluide (10) de n'importe quelle revendication précédente, dans lequel au moins un desdits compartiments de stockage de fluide (20, 22) est compactable.

6. Un équipement de transport de fluide (10) de la revendication 5, dans lequel le ou chaque compartiment de stockage de fluide compactable (20, 22) est adapté pour expulser de l'eau lorsqu'il est soumis à une force de compression.

7. Un équipement de transport de fluide (10) de n'importe quelle revendication précédente, comprenant un moyen d'entraînement (34) qui peut se mettre en prise sélectivement avec au moins une desdites roues (14) en contact avec le sol.

8. Un équipement de transport de fluide (10) de la revendication 7, dans lequel le moyen d'entraînement (34) est seulement en prise avec au moins une desdites roues (14) en contact avec le sol dans un sens de rotation de ladite roue (14).

9. Un équipement de transport de fluide (10) de n'importe quelle revendication précédente, comprenant un logement (12) destiné à loger le premier et le deuxième compartiment de stockage (20, 22), et dans lequel la rotation de l'au moins une roue (14) amène le premier filtre (24) à translater sélectivement par rapport au logement (12).

10. Un équipement de transport de fluide (10) de n'importe quelle revendication précédente, dans lequel le premier filtre (24) est fourni comme interface entre le premier et le deuxième compartiment de stockage de fluide (20, 22).

11. Un équipement de transport de fluide (10) de la revendication 9, dans lequel la translation du filtre (24) comprime l'un desdits premier et deuxième compartiments de fluide (20, 22).

12. Un équipement de transport de fluide (10) de n'importe quelle revendication précédente, comprenant une pompe (170) adaptée pour pomper du fluide de l'un desdits compartiments de stockage de fluide (20) vers l'autre desdits compartiments de stockage de fluide (22) à travers le filtre (24).

13. Un équipement de transport de fluide (10) de la revendication 12 lorsque dépendante de la revendication 7, dans lequel la pompe (170) est entraînée par le moyen d'entraînement (34).

14. Un équipement de transport de fluide (10) de n'importe laquelle des revendications 7 ou 8, dans lequel le moyen d'entraînement (34) est à engrenage.

15. Un équipement de transport de fluide (10) de n'importe quelle revendication précédente, dans lequel l'équipement comporte au moins une poignée (18).
